(19) **Europäisches Patentamt / European Patent Office / Office européen des brevets**

(11) **EP 4 733 178 A1**

(12) **EUROPEAN PATENT APPLICATION**

(43) Date of publication:
**29.04.2026   Bulletin 2026/18**

(21) Application number: **25210066.4**

(22) Date of filing: **21.10.2025**

(51) International Patent Classification (IPC):
**B62D 35/00** $^{(2006.01)}$   **B60H 1/24** $^{(2006.01)}$

(52) Cooperative Patent Classification (CPC):
**B62D 35/00; B60H 1/244**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **23.10.2024   JP 2024186913**

(71) Applicant: **TOYOTA JIDOSHA KABUSHIKI KAISHA**
**Toyota-shi, Aichi-ken 471-8571 (JP)**

(72) Inventors:
• **OKANO, Masayuki**
  **TOYOTA-SHI, AICHI-KEN, 471-8571 (JP)**
• **KABEYA, Shinji**
  **TOYOTA-SHI, AICHI-KEN, 471-8571 (JP)**

(74) Representative: **Cabinet Beau de Loménie**
**103, rue de Grenelle / CS 90800**
**75340 Paris Cedex 07 (FR)**

(54) **VEHICLE REAR PORTION STRUCTURE**

(57)   A vehicle rear portion structure is provided in which an air duct is disposed such that at least a portion thereof overlaps a vent duct as seen from a vehicle transverse direction, and, at a duct mounting portion that is provided at a vehicle body panel along a peripheral edge portion of an opening portion of the vehicle body panel, a gap between the air duct and the vehicle body panel is larger at a vehicle rear side than at a vehicle front side.

FIG.2

**Description**

Technical Field

The present disclosure relates to a vehicle rear portion structure.

Related Art

Japanese Patent Application Laid-Open (JP-A) No. 2013-71462 (Patent Document 1) discloses an invention relating to a vehicle rear portion structure. In this vehicle rear portion structure, a rear outlet duct, which exhausts air within a rear wheel house toward the vehicle rear portion side of the rear bumper cover, is provided at the inner side of the rear bumper cover and the vehicle rear side of the rear wheel house. Further, an opening portion is formed in the side wall that is at the vehicle transverse direction inner side of the rear outlet duct, and a vent duct is provided integrally with the side wall at the periphery of this opening portion. In this vehicle rear portion structure, air within the passenger cabin flows from the passage portion of a rear duct through the opening portion into the rear outlet duct, and passes through the interior of the rear outlet duct and is discharged to the exterior of the vehicle.

In the technique of the above-described prior art, the interior of the passenger cabin and the rear wheel house communicate via the rear outlet duct and the vent duct, and it is thought that noise such as road noise enters in toward the passenger cabin inner side from the rear wheel house side.

SUMMARY

In view of the above-described circumstances, an object of the present disclosure is to provide a vehicle rear portion structure that can suppress entry of noise in toward the passenger cabin inner side while enabling adjustment of the flow of the air within the rear wheel house and communication between the interior and exterior of the passenger cabin.

A vehicle rear portion structure relating to a first aspect has: a vehicle body panel structuring a portion of a vehicle transverse direction outer side of a vehicle body rear portion at a vehicle rear side of a rear wheel house, and in which is formed an opening portion to which is mounted a vent duct that communicates a passenger cabin interior and a passenger cabin exterior; and an air duct communicating the rear wheel house side and a back surface side of a vehicle, and disposed at a vehicle transverse direction inner side of a design panel that structures a portion of a design surface of a vehicle lateral side surface, wherein the air duct is disposed such that at least a portion thereof overlaps the vent duct as seen from a vehicle transverse direction, and, at a duct mounting portion that is provided at the vehicle body panel along a peripheral edge portion of the opening portion, a gap between the air duct and the vehicle body panel is larger at a vehicle rear side than at a vehicle front side.

In accordance with the vehicle rear portion structure relating to the first aspect, at the vehicle rear side of the rear wheel house, a vehicle transverse direction outer side portion of the vehicle body rear portion is structured by a vehicle body panel. A vent duct, which communicates the passenger cabin interior and the passenger cabin exterior, is mounted to an opening portion formed in this vehicle body panel. Therefore, in the present aspect, for example, when the air pressure at the passenger cabin inner side becomes higher than the air pressure at the passenger cabin outer side, the passenger cabin inner side and the passenger cabin outer side can be communicated via the vent duct.

Further, in the present aspect, the air duct is disposed at the vehicle transverse direction inner side of a design panel that structures a portion of a design surface of a vehicle lateral side surface. The rear wheel house side and the back surface side of the vehicle are communicated by this air duct. Therefore, in the present aspect, due to the air at the periphery of the rear wheel house flowing via the air duct to the back surface side of the vehicle at times such as during traveling of the vehicle, the flow of air at the periphery of the vehicle rear portion can be adjusted.

As described above, in the present aspect, the rear wheel house side and the back surface side of the vehicle are communicated by the air duct. Therefore, it is thought that noise that is generated within the rear wheel house passes through between the air duct and the vehicle body panel. It is thought that, at this time, the noise will enter into the passenger cabin via the vent duct that is positioned at the vehicle rear side of the rear wheel house.

Here, in the present aspect, the air duct is disposed such that at least a portion thereof overlaps the vent duct as seen from the vehicle transverse direction. Further, at the duct mounting portion that is provided at the vehicle body panel along the peripheral edge portion of the opening portion, the gap between the air duct and the vehicle body panel is greater at the vehicle rear side than at the vehicle front side.

Therefore, in the present aspect, it is easier for the noise that is transmitted from the rear wheel house side to the vehicle body panel side to be reflected between the air duct and the vehicle body panel at the vehicle front side of the vent duct, as compared with at the vehicle rear side of the vent duct. As a result, in the present aspect, the probability that this noise will be damped before passing through the vent duct can be increased.

A vehicle rear portion structure relating to a second aspect further has, in the vehicle rear portion structure relating to the first aspect, a front side silencing portion positioned at a vehicle front side of the vent duct and standing from the air duct toward a vehicle transverse direction inner side.

In accordance with the vehicle rear portion structure relating to the second aspect, the front side silencing portion, which stands from the air duct toward the vehicle transverse direction inner side, is positioned at the vehicle front side of the vent duct. Therefore, in the present aspect, at the vehicle front side of the vent duct, noise that is transmitted from the rear wheel house side to the vehicle body panel side can be blocked by the front side silencing portion.

In a vehicle rear portion structure relating to a third aspect, in the vehicle rear portion structure relating to the second aspect, a dimension of the front side silencing portion in a vehicle vertical direction is larger than a dimension of the vent duct in the vehicle vertical direction.

In accordance with the vehicle rear portion structure relating to the third aspect, the dimension, in the vehicle vertical direction, of the front side silencing portion is greater than the dimension of the vent duct in the vehicle vertical direction. Therefore, in the present aspect, the probability that noise that is transmitted from the rear wheel house side to the vehicle body panel side will be blocked by the front side silencing portion at the vehicle front side of the vent duct can be increased.

In a vehicle rear portion structure relating to a fourth aspect, in the vehicle rear portion structure relating to the second aspect or the third aspect, the front side silencing portion is molded integrally with the air duct.

In accordance with the vehicle rear portion structure relating to the fourth aspect, the front side silencing portion is molded integrally with the air duct, and a reduction in the number of parts can be devised.

In a vehicle rear portion structure relating to a fifth aspect, in the vehicle rear portion structure relating to any one of the second aspect through the fourth aspect, the front side silencing portion is structured by a pair of wall portions that are disposed with an interval therebetween in a thickness direction.

In accordance with the vehicle rear portion structure relating to the fifth aspect, the front side silencing portion is structured by the pair of wall portions. These wall portions are disposed with an interval therebetween in the thickness direction thereof. Therefore, in the present aspect, due to noise that is transmitted from the rear wheel house side to the vehicle body panel side being reflected between the pair of wall portions, the noise can be damped. Further, in the present aspect, the air duct is reinforced by the pair of wall portions, and the bending rigidity of the air duct can be ensured.

In a vehicle rear portion structure relating to a sixth aspect, in the vehicle rear portion structure relating to the fifth aspect, the front side silencing portion is disposed such that, in the vehicle transverse direction, an interval between the front side silencing portion and the vehicle body panel is narrower than an interval between the wall portions.

In accordance with the vehicle rear portion structure relating to the sixth aspect, the pair of wall portions of the front side silencing portion are disposed such that, in the vehicle transverse direction, the interval between the pair of wall portions and the vehicle body panel is narrower than the interval between the wall portions. Therefore, in the present aspect, between the air duct and the vehicle body panel, the route of the noise that heads from the vehicle front side of the front side silencing portion toward the vent duct is expanded between the wall portions, and the probability of noise that is transmitted from the rear wheel house side to the vehicle body panel side being reflected and damped between these wall portions can be increased. Further, in the present aspect, by ensuring the gap between the front side silencing portion and the vehicle body panel, resistance to the flow of air that is discharged from the vent duct to the passenger cabin outer side can be reduced.

In a vehicle rear portion structure relating to a seventh aspect, in the vehicle rear portion structure relating to any one of the second aspect through the sixth aspect, the vent duct has a front side projecting wall portion that projects out toward a vehicle transverse direction outer side at a vehicle front side of the opening portion and that extends in a vehicle vertical direction, and the front side projecting wall portion is disposed so as to overlap the front side silencing portion as seen from a vehicle longitudinal direction.

In accordance with the vehicle rear portion structure relating to the seventh aspect, the vent duct has the front side projecting wall portion. This front side projecting wall portion projects out toward the vehicle transverse direction outer side at the vehicle front side of the opening portion provided in the vehicle body panel, and extends in the vehicle vertical direction. Therefore, in the present aspect, at the vehicle front side of the vent duct, the path of the noise that is transmitted from the rear wheel house side to the vehicle body panel side can be bent by the front side projecting wall portion. Further, due to this noise being reflected between the front side silencing portion and the front side projecting wall portion, the noise can be damped.

A vehicle rear portion structure relating to an eighth aspect further has, in the vehicle rear portion structure relating to the first aspect, a front side silencing member positioned at a vehicle front side of the vent duct and standing from the vehicle body panel toward a vehicle transverse direction outer side.

In accordance with the vehicle rear portion structure relating to the eighth aspect, the front side silencing member, which stands from the vehicle body panel toward the vehicle transverse direction outer side, is positioned at the vehicle front side of the vent duct. Therefore, in the present aspect, at the vehicle front side of the vent duct, noise that is transmitted from the rear wheel house side to the vehicle body panel side can be blocked by the front side silencing member.

In a vehicle rear portion structure relating to a ninth aspect, in the vehicle rear portion structure relating to the eighth aspect, the front side silencing member is structured to include urethane.

In accordance with the vehicle rear portion structure relating to the ninth aspect, due to noise being reflected within the voids of the urethane included in the front side silencing member, this noise can be damped.

A vehicle rear portion structure relating to a tenth aspect has: a vehicle body panel structuring a portion of a vehicle transverse direction outer side of a vehicle body rear portion at a vehicle rear side of a rear wheel house, and in which is formed an opening portion to which is mounted a vent duct that communicates a passenger cabin interior and a passenger cabin exterior; and an air duct communicating the rear wheel house side and a back surface side of a vehicle, and disposed at a vehicle transverse direction inner side of a design panel that structures a portion of a design surface of a vehicle lateral side surface, wherein the air duct is disposed such that at least a portion thereof overlaps the vent duct as seen from a vehicle transverse direction, and, at a duct mounting portion that is provided at the vehicle body panel along a peripheral edge portion of the opening portion, a gap between the air duct and the vehicle body panel is larger at a vehicle upper side than at a vehicle lower side.

In accordance with the vehicle rear portion structure relating to the tenth aspect, in the same way as in the vehicle rear portion structure relating to the first aspect, the passenger cabin inner side and the passenger cabin outer side can be communicated via the vent duct, and the flow of air within the rear wheel house can be adjusted by the air duct.

It is thought that noise, such as road noise generated by the contact of the rear tire and the road surface, enters in from the vehicle lower side toward the vent duct side.

Here, in the present aspect, the air duct is disposed such that at least a portion thereof overlaps the vent duct as seen from the vehicle transverse direction. Further, at the duct mounting portion that is provided at the vehicle body panel along the peripheral edge portion of the opening portion, the gap between the air duct and the quarter panel is larger at the vehicle upper side than at the vehicle lower side.

Therefore, in the present aspect, it is easier for the noise that is transmitted from the vehicle lower side to the vehicle body panel side to be reflected between the air duct and the vehicle body panel at the vehicle lower side of the vent duct, as compared with at the vehicle upper side of the vent duct. As a result, in the present aspect, the probability that this noise will be damped before passing through the vent duct can be increased.

A vehicle rear portion structure relating to an eleventh aspect further has, in the vehicle rear portion structure relating to the tenth aspect, a lower side silencing portion positioned at a vehicle lower side of the vent duct and standing from the air duct toward a vehicle transverse direction inner side.

In accordance with the vehicle rear portion structure relating to the eleventh aspect, the lower side silencing portion, which stands from the air duct toward the vehicle transverse direction inner side, is positioned at the vehicle lower side of the vent duct. Therefore, in the present aspect, at the vehicle lower side of the vent duct, noise that is transmitted from the vehicle lower side to the vehicle body panel side can be blocked by the lower side silencing portion.

In a vehicle rear portion structure relating to a twelfth aspect, in the vehicle rear portion structure relating to the eleventh aspect, a dimension of the lower side silencing portion in a vehicle longitudinal direction is larger than a dimension of the vent duct in the vehicle longitudinal direction.

In accordance with the vehicle rear portion structure relating to the twelfth aspect, the dimension, in the vehicle longitudinal direction, of the lower side silencing portion is greater than the dimension of the vent duct in the vehicle longitudinal direction. Therefore, in the present aspect, the probability that noise that is transmitted from the vehicle lower side to the vehicle body panel side will be blocked by the lower side silencing portion at the vehicle lower side of the vent duct can be increased.

In a vehicle rear portion structure relating to a thirteenth aspect, in the vehicle rear portion structure relating to the eleventh aspect or the twelfth aspect, the lower side silencing portion is molded integrally with the air duct.

In accordance with the vehicle rear portion structure relating to the thirteenth aspect, the lower side silencing portion is molded integrally with the air duct, and a reduction in the number of parts can be devised.

In a vehicle rear portion structure relating to a fourteenth aspect, in the vehicle rear portion structure relating to any one of the eleventh aspect through the thirteenth aspect, the lower side silencing portion is structured by a pair of wall portions that are disposed with an interval therebetween in a thickness direction.

In accordance with the vehicle rear portion structure relating to the fourteenth aspect, the lower side silencing portion is structured by the pair of wall portions. These wall portions are disposed with an interval therebetween in the thickness direction thereof. Therefore, in the present aspect, due to noise that is transmitted from the vehicle lower side to the vehicle body panel side being reflected between the pair of wall portions, the noise can be damped. Further, in the present aspect, the air duct is reinforced by the pair of wall portions, and the bending rigidity of the air duct can be ensured.

In a vehicle rear portion structure relating to a fifteenth aspect, in the vehicle rear portion structure relating to the fourteenth aspect, the lower side silencing portion is disposed such that, in the vehicle transverse direction, an interval between the lower side silencing portion and the vehicle body panel is narrower than an interval between the wall portions.

In accordance with the vehicle rear portion structure relating to the fifteenth aspect, the pair of wall portions of the lower side silencing portion are disposed such that, in the vehicle transverse direction, the interval between the pair of wall portions and the vehicle body panel is narrower than the interval between the wall portions. Therefore, in the present aspect, between the air duct and the vehicle body panel, the route of the noise that heads from the vehicle lower side of the lower side silencing portion toward the vent duct is expanded between the wall portions, and the probability of noise that is transmitted from the vehicle lower side to the vehicle body panel side being reflected and damped between these wall portions can be increased. Further, in the present aspect, by ensuring the gap between the lower side silencing portion and the vehicle body panel, resistance to the flow of air that is discharged from the vent duct to the passenger cabin outer side can be reduced.

In a vehicle rear portion structure relating to a sixteenth aspect, in the vehicle rear portion structure relating to any one of the eleventh aspect through the fifteenth aspect, the vent duct has a lower side projecting wall portion that projects out toward a vehicle transverse direction outer side at a vehicle lower side of the opening portion and that extends in a vehicle longitudinal direction, and the lower side projecting wall portion is disposed so as to overlap the lower side silencing portion as seen from a vehicle vertical direction.

In accordance with the vehicle rear portion structure relating to the sixteenth aspect, the vent duct has the lower side projecting wall portion. This lower side projecting wall portion projects out toward the vehicle transverse direction outer side at the vehicle lower side of the opening portion provided in the vehicle body panel, and extends in the vehicle longitudinal direction. Therefore, in the present aspect, at the vehicle lower side of the vent duct, the path of the noise that is transmitted from the vehicle lower side to the vehicle body panel side can be bent by the lower side projecting wall portion. Further, due to this noise being reflected between the lower side silencing portion and the lower side projecting wall portion, the noise can be damped.

A vehicle rear portion structure relating to a seventeenth aspect further has, in the vehicle rear portion structure relating to the tenth aspect, a lower side silencing member positioned at a vehicle lower side of the vent duct and standing from the vehicle body panel toward a vehicle transverse direction outer side.

In accordance with the vehicle rear portion structure relating to the seventeenth aspect, the lower side silencing member, which stands from the vehicle body panel toward the vehicle transverse direction outer side, is positioned at the vehicle lower side of the vent duct. Therefore, in the present aspect, at the vehicle lower side of the vent duct, noise that is transmitted from the rear wheel house side to the vehicle body panel side can be blocked by the lower side silencing member.

In a vehicle rear portion structure relating to an eighteenth aspect, in the vehicle rear portion structure relating to the seventeenth aspect, the lower side silencing member is structured to include urethane.

In accordance with the vehicle rear portion structure relating to the eighteenth aspect, due to noise being reflected within the voids of the urethane included in the lower side silencing member, this noise can be damped.

As described above, the vehicle rear portion structure relating to the present disclosure has the excellent effect of being able to suppress entry of noise in toward the passenger cabin inner side while enabling adjustment of the flow of the air within the rear wheel house and communication between the interior and exterior of the passenger cabin.

BRIEF DESCRIPTION OF THE DRAWINGS

Fig. 1 is a side view schematically illustrating the structure of a vehicle rear portion to which a vehicle rear portion structure relating to a present embodiment is applied;

Fig. 2 is a cross-sectional view schematically illustrating the structure of the vehicle rear portion to which the vehicle rear portion structure relating to the present embodiment is applied (a cross-sectional view illustrating the state cut along line 2-2 of Fig. 1);

Fig. 3 is a perspective view seen from a vehicle front side and illustrating the structure of the vehicle rear portion to which the vehicle rear portion structure relating to the present embodiment is applied;

Fig. 4 is a rear view illustrating the structure of the vehicle rear portion to which the vehicle rear portion structure relating to the present embodiment is applied;

Fig. 5 is a cross-sectional view schematically illustrating the structure of the vehicle rear portion to which the vehicle rear portion structure relating to the present embodiment is applied (a cross-sectional view illustrating the state cut along line 5-5 of Fig. 2);

Fig. 6 is a cross-sectional view schematically illustrating the structure of the vehicle rear portion to which the vehicle rear portion structure relating to the present embodiment is applied (a cross-sectional view illustrating the state cut along line 6-6 of Fig. 2);

Fig. 7 is a side view seen from a vehicle transverse direction inner side and schematically illustrating the structure of an air duct that structures a main portion of the vehicle rear portion structure relating to the present embodiment;

Fig. 8 is a front view seen from the vehicle front side and schematically illustrating the structure of the air duct that structures a main portion of the vehicle rear portion structure relating to the present embodiment;

Fig. 9 is a rear view seen from the vehicle rear side and schematically illustrating the structure of the air duct that structures a main portion of the vehicle rear portion structure relating to the present embodiment;

Fig. 10 is a graph comparing a noise eliminating effect due to a silencing portion provided at the air duct that structures a main portion of the vehicle rear portion structure relating to the present embodiment, and a theoretical model that considers the silencing portion to be an expansion silencer; and

Fig. 11 is a cross-sectional view schematically illustrating the structure of the vehicle rear portion to which a vehicle rear portion structure relating to a modified example of the present embodiment is applied (a cross-sectional view corresponding to Fig. 5).

DETAILED DESCRIPTION

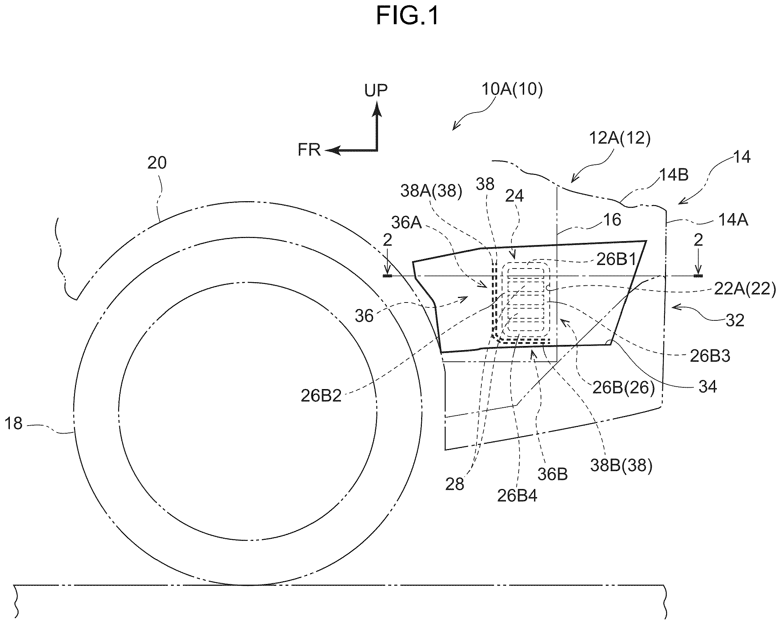

An example of an embodiment of a vehicle rear portion structure relating to a present embodiment is described hereinafter with reference to Fig. 1 through Fig. 10. Note that arrow FR that is shown appropriately in the respective drawings indicates the vehicle front side, arrow UP indicates the vehicle upper side, and arrow LH indicates the vehicle transverse direction left side.

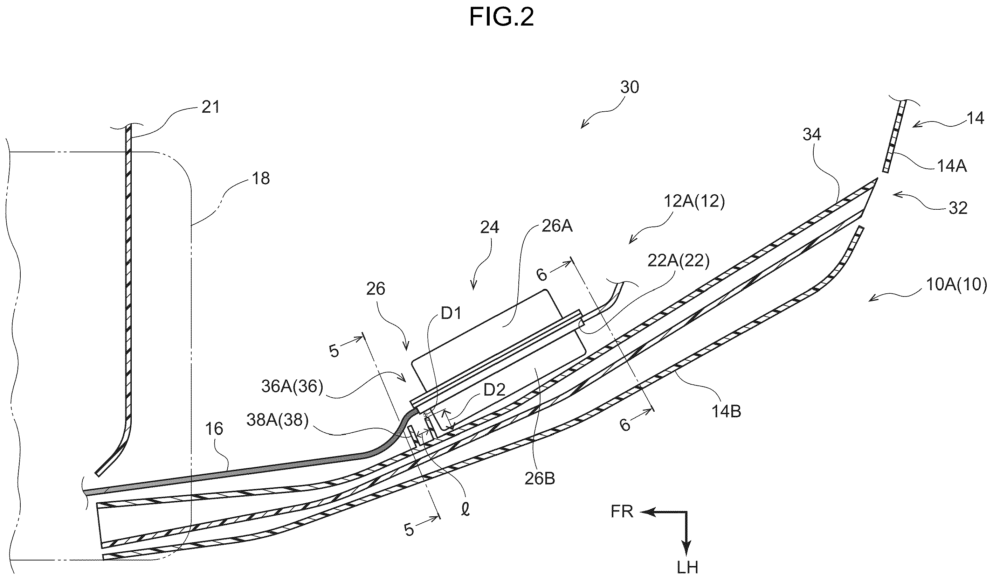

First, the schematic structure of a vehicle rear portion 10A at a vehicle 10 to which the vehicle rear portion structure relating to the present embodiment is applied is described by using Fig. 1 and Fig. 2. Note that, in the present embodiment, because the vehicle 10 is a structure that basically has left-right symmetry, hereinafter, mainly the structures of the portions at the vehicle transverse direction left side of the vehicle 10 are described, and description of the structures of the portions at the vehicle transverse direction right side is omitted as appropriate.

The vehicle rear portion 10A has a vehicle body rear portion 12A structuring the vehicle rear side portion of a vehicle body 12, and a bumper cover 14 serving as a design panel that covers the vehicle body rear portion 12A.

The vehicle body rear portion 12A is structured to include a quarter panel 16 serving as a vehicle body panel that structures a portion of the vehicle transverse direction outer side of the vehicle body rear portion 12A, and a rear wheel house 20 in which a rear tire 18 is accommodated and that structures the vehicle front side portion of the quarter panel 16 at the vehicle body rear portion 12A. Note that a wheel house liner 21 is mounted to the rear tire 18 side surface of the rear wheel house 20 interior.

In detail, the quarter panel 16 is structured by a steel plate and is disposed with the vehicle transverse direction being the plate thickness direction thereof. An opening portion 22 formed in a rectangular shape as seen from the vehicle transverse direction is formed in the quarter panel 16. A vent duct 24 is mounted to the opening portion 22.

The vent duct 24 is structured to include a main body portion 26 structuring the main portion of the vent duct 24, and plural opening/closing valves 28. The main body portion 26 is structured to include an inserted portion 26A that is inserted from the opening portion 22 into a passenger cabin 30 interior, and an outer frame portion 26B projecting out toward the vehicle transverse direction outer side from the inserted portion 26A.

The outer peripheral side of the inserted portion 26A is formed in the shape of a rectangular tube, and the interior of the inserted portion 26A is formed in a lattice shape as seen from the vehicle transverse direction. In the state in which the inserted portion 26A is inserted from the opening portion 22 into the passenger cabin 30, the inserted portion 26A is mounted to the opening portion 22 via unillustrated anchor portions, and more specifically, is mounted to a duct mounting portion 22A that is provided along the peripheral edge portion of the opening portion 22 at the quarter panel 16. Note that the duct mounting portion 22A is, in the state in which the vent duct 24 is mounted to the opening portion 22, the portion that is covered by the outer frame portion 26B of the vent duct 24 at the quarter panel 16, or the portion that contacts the outer frame portion 26B.

The outer frame portion 26B is formed in the shape of a frame that is rectangular as seen from the vehicle transverse direction. The outer frame portion 26B is structured to include an upper side projecting wall portion 26B1 that structures the vehicle upper side portion and whose thickness direction is the vehicle vertical direction, a front side projecting wall portion 26B2 that structures the vehicle front side portion and whose thickness direction is the vehicle longitudinal direction, a rear side projecting wall portion 26B3 that structures the vehicle rear side portion and whose thickness direction is the vehicle longitudinal direction, and a lower side projecting wall portion 26B4 that structures the vehicle lower side portion and whose thickness direction is the vehicle vertical direction.

On the other hand, the opening/closing valves 28 are structured of materials that can elastically deform (elastic bodies) such as rubber, and are shaped as rectangular sheets that extend in the vehicle longitudinal direction. The plural opening/closing valves 28 are disposed successively in the vehicle vertical direction at the vehicle transverse direction outer side of the inserted portion 26A, and the upper edge portions thereof are swingably mounted to the inserted portion 26A.

At the vent duct 24 that is structured as described above, when the air pressure at the inner side of the passenger cabin 30 becomes higher than the air pressure at the outer side of the passenger cabin 30 at times such as when an unillustrated air conditioning device operates or when an unillustrated door is opened/closed, the respective opening/closing valves 28 are pushed by the air within the passenger cabin 30 and swing, and the passenger cabin 30 interior and the passenger cabin 30 exterior are communicated via the vent duct 24.

On the other hand, the bumper cover 14 is structured to include a rear wall portion 14A that structures a portion of the design surface of the back surface side of the vehicle 10, and a side wall portion 14B that structures a portion of the design surface of a lateral surface side of the vehicle 10 and covers the vent duct 24 from the vehicle transverse direction outer side. In the present embodiment, an air duct 32 is disposed at the vehicle transverse direction inner side of the side wall portion 14B and the vehicle transverse direction outer side of the quarter panel 16.

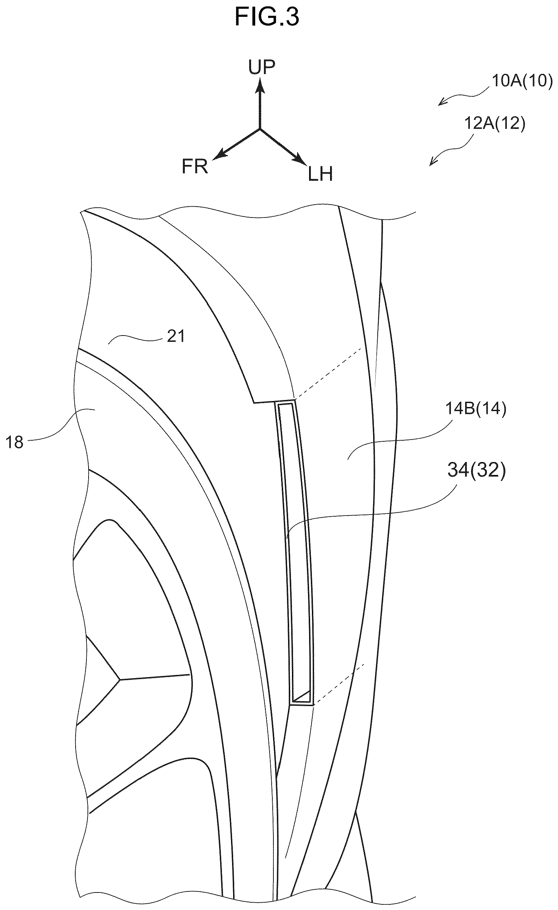

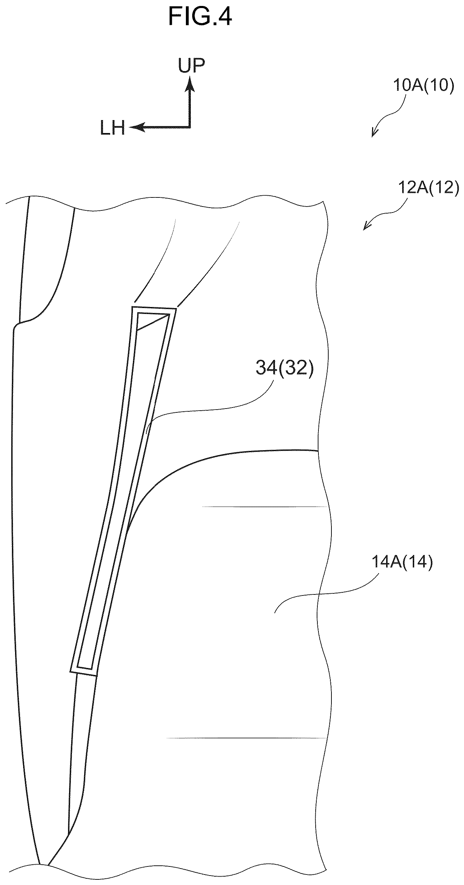

The air duct 32 is made of resin, and, as illustrated in Fig. 3 and Fig. 4 as well, is structured to include a duct main body portion 34 that is tubular and whose vehicle front side opens at the interior of the rear wheel house 20 and whose vehicle rear side opens at the rear wall portion 14A of the bumper cover 14, and a silencing portion 36 provided integrally with the duct main body portion 34. Namely, in the present embodiment, the duct main body portion 34 bears the main portion of the functions relating to the aerodynamics of the air duct 32.

In detail, as seen from the vehicle vertical direction, the duct main body portion 34 extends so as to run along the design surface of the bumper cover 14, and more specifically, so as to extend from the outer edge of the rear wheel house 20 toward the vehicle transverse direction inner side and vehicle rear side, and, as seen from the vehicle transverse direction, covers the entire vent duct 24. Further, the cross-sectional shape, as seen from the vehicle longitudinal direction, of the duct main body portion 34 is the shape of a rectangle whose length direction is the vehicle vertical direction. Note that the duct main body portion 34 is mounted to the bumper cover 14 or the quarter panel 16 by unillustrated mounting members. Further, the duct main body portion 34 does not have to be a shape that covers the entire vent duct 24 as seen from the vehicle transverse direction, and it suffices for the duct main body portion 34 to be a shape such that a portion thereof overlaps the vent duct 24 as seen from the vehicle transverse direction.

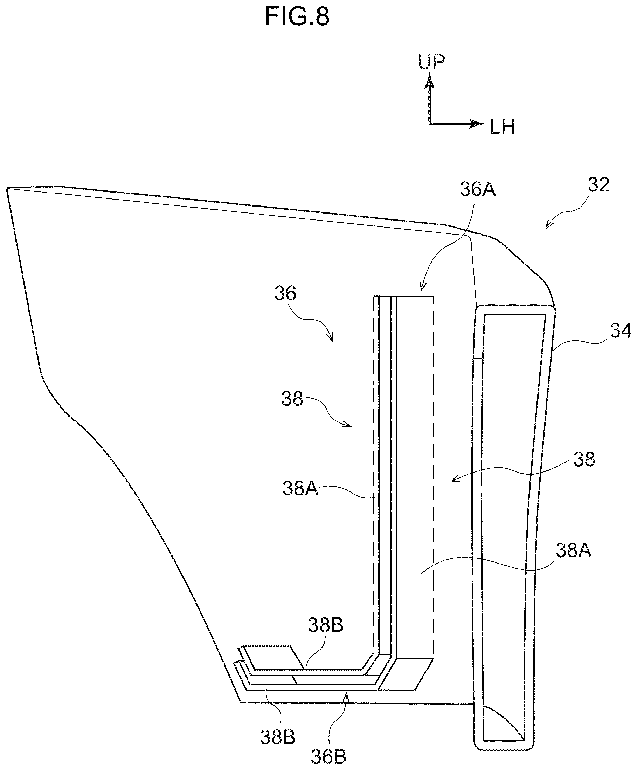

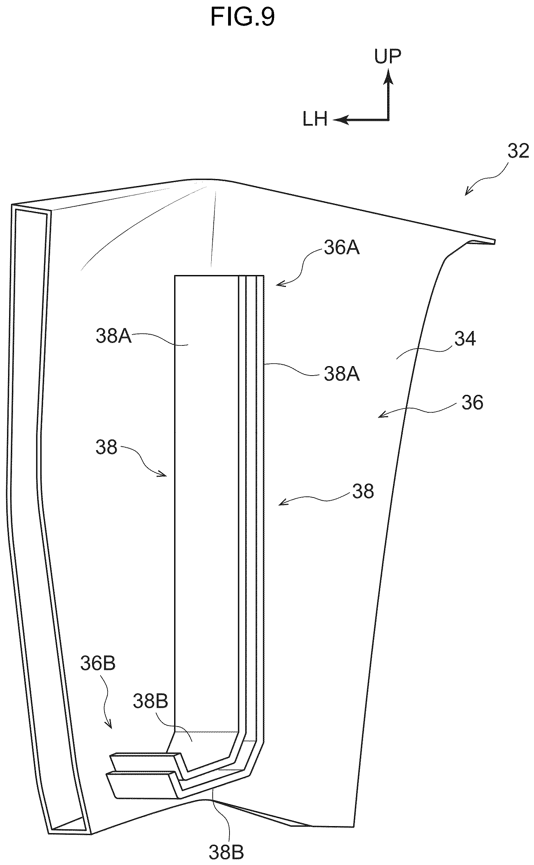

On the other hand, as illustrated in Fig. 8 and Fig. 9, the silencing portion 36 is structured to include a pair of silencing wall portions 38. The silencing wall portion 38 is formed in an L-shape as seen from the vehicle transverse direction, and includes a front side wall portion 38A, which serves as a wall portion that a structures the vehicle front side portion of the silencing wall portion 38 and whose plate thickness direction is the vehicle longitudinal direction and that extends in the vehicle vertical direction, and a lower side wall portion 38B, which serves as a wall portion that structures the vehicle lower side portion of the silencing wall portion 38 and whose plate thickness direction is the vehicle vertical direction and that extends in the vehicle longitudinal direction.

The silencing wall portions 38 are disposed with a constant interval therebetween in the thickness directions of the silencing wall portions 38. Note that, hereinafter, the group of the pair of front side wall portions 38A will be called a front side silencing portion 36A, and the group of the pair of lower side wall portions 38B will be called a lower side silencing portion 36B.

Note that, as illustrated in Fig. 1, the front side wall portions 38A are positioned at the vehicle front side of the vent duct 24, and the lower side wall portions 38B are positioned at the vehicle lower side of the vent duct 24. Further, the dimension, in the vehicle vertical direction, of the front side wall portions 38A is greater than the dimension of the vent duct 24 in the vehicle vertical direction. Moreover, the dimension, in the vehicle longitudinal direction, of the lower side wall portions 38B is greater than the dimension of the vent duct 24 in the vehicle longitudinal direction.

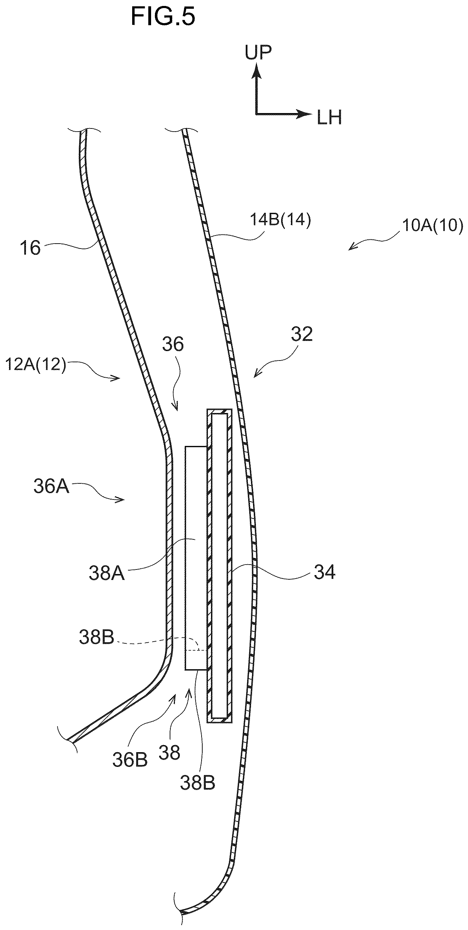

Further, in the present embodiment, as illustrated in Fig. 2 and Fig. 5, due to the front side silencing portion 36A being provided at the air duct 32, in the vehicle vertical direction range in which the lower side silencing portion 36B is not provided, at the duct mounting portion 22A at the quarter panel 16, the gap between the air duct 32 and the quarter panel 16 is larger at the vehicle rear side of the opening portion 22 than at the vehicle front side of the opening portion 22.

Moreover, in the present embodiment, the front side silencing portion 36A is disposed such that, in the vehicle transverse direction, the interval between the front side silencing portion 36A and the quarter panel 16 is narrower than the interval between the front side wall portions 38A.

In addition, in the present embodiment, the front side projecting wall portion 26B2 of the vent duct 24 is disposed so as to overlap the front side silencing portion 36A as seen from the vehicle longitudinal direction.

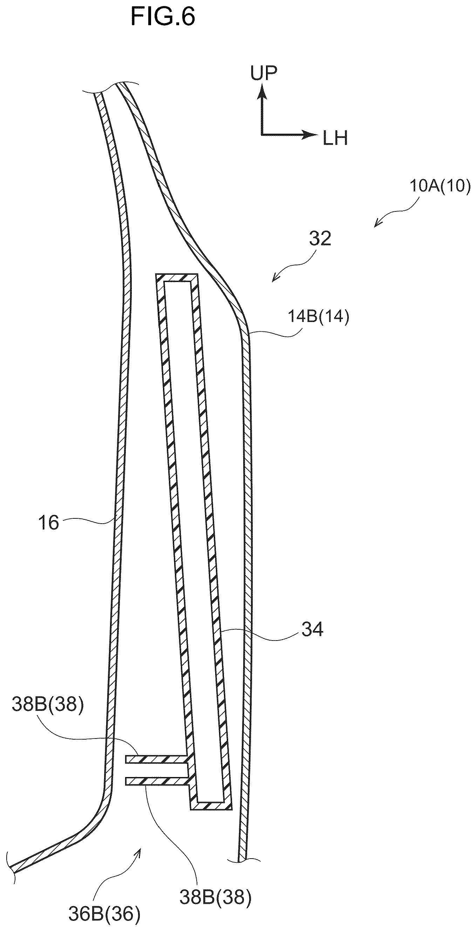

In the present embodiment, as illustrated in Fig. 2 and Fig. 6, due to the lower side silencing portion 36B being provided at the air duct 32, in the vehicle longitudinal direction range in which the front side silencing portion 36A is not provided, at the duct mounting portion 22A at the quarter panel 16, the gap between the air duct 32 and the quarter panel 16 is larger at the vehicle upper side of the opening portion 22 than at the vehicle lower side of the opening portion 22.

Moreover, in the present embodiment, the lower side silencing portion 36B is disposed such that, in the vehicle transverse direction, the interval between the lower side silencing portion 36B and the quarter panel 16 is narrower than the interval between the lower side wall portions 38B.

In addition, in the present embodiment, the lower side projecting wall portion 26B4 of the vent duct 24 is disposed so as to overlap the lower side silencing portion 36B as seen from the vehicle vertical direction.

(Operation and Effects of Present Embodiment)

Operation and effects of the present embodiment are described next.

In the present embodiment, as illustrated in Fig. 1 and Fig. 2, at the vehicle rear side of the rear wheel house 20, a portion of the vehicle transverse direction outer side of the vehicle body rear portion 12A is structured by the quarter panel 16. The vent duct 24, which communicates the passenger cabin 30 interior and the passenger cabin 30 exterior, is mounted to the opening portion 22 formed in the quarter panel 16. Therefore, in the present embodiment, for example, when the air pressure at the inner side of the passenger cabin 30 becomes higher than the air pressure at the outer side of the passenger cabin 30, the inner side of the passenger cabin 30 and the outer side of the passenger cabin 30 can be communicated via the vent duct 24.

Further, in the present embodiment, the air duct 32 is disposed at the vehicle transverse direction inner side of the side wall portion 14B of the bumper cover 14 that structures a portion of the design surface of a lateral surface of the vehicle 10. The rear wheel house 20 side and the back surface side of the vehicle 10 are communicated by this air duct 32. Therefore, in the present embodiment, due to the air at the periphery of the rear wheel house 20 flowing via the air duct 32 to the back surface side of the vehicle 10 at times such as during traveling of the vehicle 10, the flow of air at the periphery of the vehicle rear portion 10A, and at the periphery of the bumper cover 14 in particular, can be adjusted.

As described above, in the present embodiment, the rear wheel house 20 side and the back surface side of the vehicle 10 are communicated by the air duct 32. Therefore, it is thought that noise, such as noise that is generated within the rear wheel house 20 and road noise generated by the contact of the rear tire 18 and the road surface, passes through between the air duct 32 and the quarter panel 16. It is thought that, at this time, such noise will enter into the passenger cabin 30 via the vent duct 24 that is positioned at the vehicle rear side of the rear wheel house 20.

Here, in the present embodiment, the air duct 32 is disposed such that at least a portion thereof overlaps the vent duct 24 as seen from the vehicle transverse direction. Further, at the duct mounting portion 22A that is provided at the quarter panel 16 along the peripheral edge portion of the opening portion 22, the gap between the air duct 32 and the quarter panel 16 is greater at the vehicle rear side than at the vehicle front side.

Therefore, in the present embodiment, it is easier for the noise that is transmitted from the rear wheel house 20 side to the quarter panel 16 side to be reflected between the air duct 32 and the quarter panel 16 at the vehicle front side of the vent duct 24, as compared with at the vehicle rear side of the vent duct 24. As a result, in the present embodiment, the probability that this noise will be damped before passing through the vent duct 24 can be increased.

In the present embodiment, the front side silencing portion 36A, which stands from the duct main body portion 34 of the air duct 32 toward the vehicle transverse direction inner side, is positioned at the vehicle front side of the vent duct 24. Therefore, in the present embodiment, at the vehicle front side of the vent duct 24, noise that is transmitted from the rear wheel house 20 side to the quarter panel 16 side can be blocked by the front side silencing portion 36A.

Further, in the present embodiment, the dimension, in the vehicle vertical direction, of the front side silencing portion 36A is greater than the dimension of the vent duct 24 in the vehicle vertical direction. Therefore, in the present embodiment, the probability that noise that is transmitted from the rear wheel house 20 side to the quarter panel 16 side will be blocked by the front side silencing portion 36A at the vehicle front side of the vent duct 24 can be increased.

In the present embodiment, the silencing portion 36 that includes the front side silencing portion 36A and the lower side silencing portion 36B is molded integrally with the duct main body portion 34, and a reduction in the number of parts can be devised.

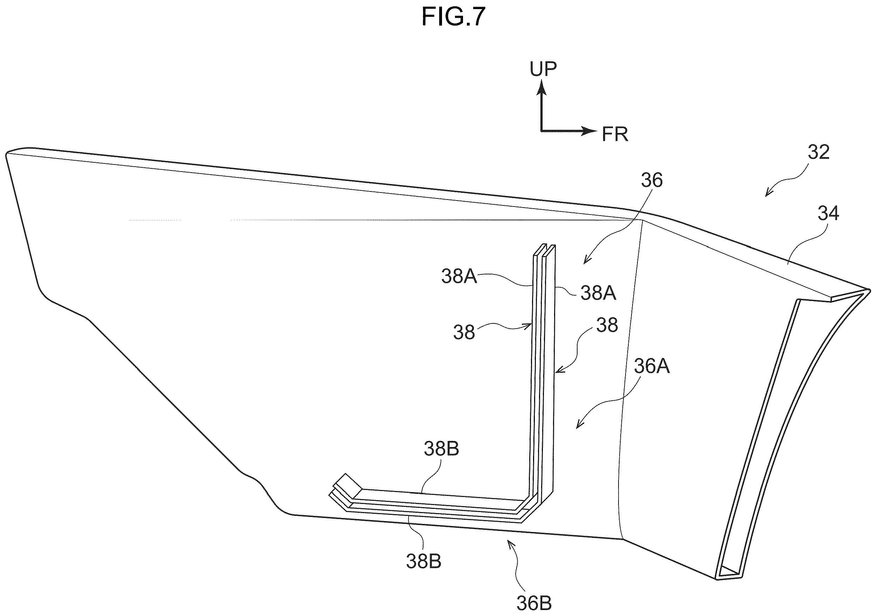

Further, in the present embodiment, as illustrated in Fig. 7 as well, the front side silencing portion 36A is structured by the pair of front side wall portions 38A. These front side wall portions 38A are disposed with an interval therebetween in the thickness direction thereof. Therefore, in the present embodiment, due to noise that is transmitted from the rear wheel house 20 side to the quarter panel 16 side being reflected between the pair of front side wall portions 38A, the noise can be damped. Further, in the present embodiment, the air duct 32 is reinforced by the pair of front side wall portions 38A, and the bending rigidity of the air duct 32 can be ensured.

In the present embodiment, the pair of front side wall portions 38A of the front side silencing portion 36A are disposed such that, in the vehicle transverse direction, the interval between the quarter panel 16 and the front side wall portions 38A is narrower than the interval between the front side wall portions 38A. Therefore, in the present embodiment, between the air duct 32 and the quarter panel 16, the route of the noise that heads from the vehicle front side of the front side silencing portion 36A toward the vent duct 24 is expanded between the front side wall portions 38A, and the probability of noise that is transmitted from the rear wheel house 20 side to the quarter panel 16 side being reflected and damped between the front side wall portions 38A can be increased.

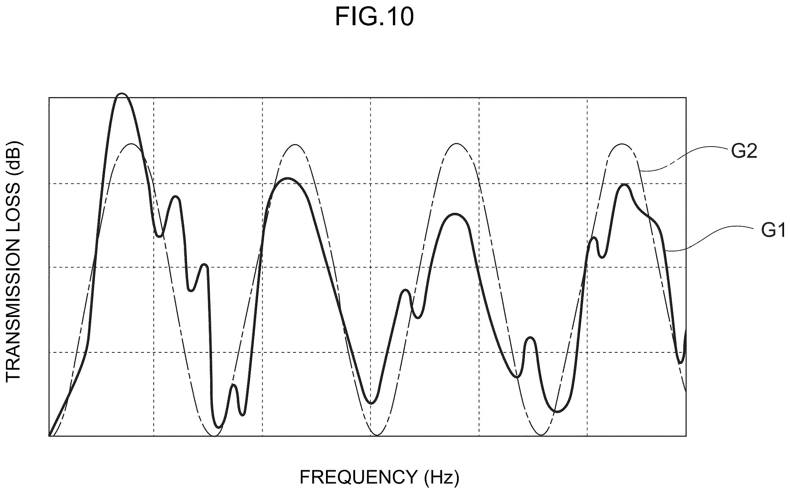

Here, solid line G1 in Fig. 10 shows the relationship between transmission loss TL (dB) and frequency f (Hz) in a case in which, in a model that models the portions per unit length of the front side silencing portion 36A, microphones were placed at a thickness direction one side and other side of the portion corresponding to the front side wall portions 38A in this model such that the model was disposed therebetween, and a predetermined noise was emitted from that thickness direction one side toward the model.

On the other hand, when the portion per unit length of the front side silencing portion 36A is considered to be an expansion silencer, the transmission loss TL (dB) is determined by the following formula.

[Formula 1]

$$TL = 10 log \left\{ 1 + \frac{1}{4}\left( m - \frac{1}{m} \right)^2 sin^2 kl \right\} \cdot \cdot \cdot \quad (A)$$

wherein

m: D2/D1 (D1 is the distance between the distal ends of the front side wall portions 38A and the quarter panel 16, D2 is the length of the front side wall portions 38A as seen from the vehicle vertical direction)
k: 2πf/c (c is the sound velocity (m/s))
l: distance (m) between front side wall portions 38A

The relationship between the transmission loss TL and the frequency f that is obtained by formula (A) is shown by one-dot chain line G2 of Fig. 10, and it can be considered that the one-dot chain line G2 and the solid line G1 approximate one another. Namely, in the present embodiment, it can be considered that the front side silencing portion 36A, and accordingly the silencing portion 36, functions as an expansion silencer.

In the present embodiment, as illustrated in Fig. 2, by ensuring the gap between the front side silencing portion 36A and the quarter panel 16, resistance to the flow of air that is discharged from the vent duct 24 to the outer side of the passenger cabin 30 can be reduced.

Further, in the present embodiment, the vent duct 24 has the front side projecting wall portion 26B2. This front side projecting wall portion 26B2 projects out toward the vehicle transverse direction outer side at the vehicle front side of the opening portion 22 provided in the quarter panel 16, and extends in the vehicle vertical direction. Therefore, in the present embodiment, at the vehicle front side of the vent duct 24, the path of the noise that is transmitted from the rear wheel house 20 side to the quarter panel 16 side can be bent by the front side projecting wall portion 26B2. Further, due to this noise being reflected between the front side silencing portion 36A and the front side projecting wall portion 26B2, the noise can be damped.

In the present embodiment, as illustrated in Fig. 6, at the duct mounting portion 22A that is provided along the peripheral edge portion of the opening portion 22 at the quarter panel 16, the gap between the air duct 32 and the quarter panel 16 is larger at the vehicle upper side than at the vehicle lower side.

Therefore, in the present embodiment, it is easier for the noise that is transmitted from the vehicle lower side to the quarter panel 16 side to be reflected between the air duct 32 and the quarter panel 16 at the vehicle lower side of the vent duct 24, as compared with at the vehicle upper side of the vent duct 24. As a result, in the present embodiment, the probability that this noise will be damped before passing through the vent duct 24 can be increased.

Further, in the present embodiment, the lower side silencing portion 36B, which stands from the duct main body portion 34 of the air duct 32 toward the vehicle transverse direction inner side, is positioned at the vehicle lower side of the vent duct 24. Therefore, in the present embodiment, at the vehicle lower side of the vent duct 24, the noise that is transmitted from the vehicle lower side to the quarter panel 16 side can be blocked by the lower side silencing portion 36B.

Moreover, as illustrated in Fig. 1, in the present embodiment, the dimension, in the vehicle longitudinal direction, of the lower side wall portions 38B is greater than the dimension of the vent duct 24 in the vehicle longitudinal direction. Therefore, in the present embodiment, the probability that the noise that is transmitted from the vehicle lower side to the quarter panel 16 side will be blocked by the lower side silencing portion 36B at the vehicle lower side of the vent duct 24 can be increased.

Further, in the present embodiment, as illustrated in Fig. 6 as well, the lower side silencing portion 36B is structured by the pair of lower side wall portions 38B. These lower side wall portions 38B are disposed with an interval therebetween in the thickness direction thereof. Therefore, in the present embodiment, due to noise that is transmitted from the vehicle lower side to the quarter panel 16 side being reflected between the pair of lower side wall portions 38B, the noise can be damped. Further, in the present embodiment, the air duct 32 is reinforced by the pair of lower side wall portions 38B, and the bending rigidity of the air duct 32 can be ensured.

In the present embodiment, the pair of lower side wall portions 38B of the lower side silencing portion 36B are disposed such that, in the vehicle transverse direction, the interval between the quarter panel 16 and the lower side wall portions 38B is narrower than the interval between the lower side wall portions 38B. Therefore, in the present embodiment, between the air duct 32 and the quarter panel 16, the route of the noise that heads from the vehicle lower side of the lower side silencing portion 36B toward the vent duct 24 is expanded between the lower side wall portions 38B, and the probability of noise that is transmitted from the vehicle lower side to the quarter panel 16 side being reflected and damped between the lower side wall portions 38B can be increased.

In the present embodiment, by ensuring the gap between the lower side silencing portion 36B and the quarter panel 16, resistance to the flow of air that is discharged from the vent duct 24 to the outer side of the passenger cabin 30 can be reduced.

In addition, in the present embodiment, as illustrated in Fig. 1, the vent duct 24 has the lower side projecting wall portion 26B4. This lower side projecting wall portion 26B4 projects out toward the vehicle transverse direction outer side at the vehicle lower side of the opening portion 22 provided in the quarter panel 16, and extends in the vehicle longitudinal direction. Therefore, in the present embodiment, at the vehicle lower side of the vent duct 24, the path of the noise that is transmitted from the vehicle lower side to the quarter panel 16 side can be bent by the lower side projecting wall portion 26B4. Further, due to this noise being reflected between the lower side silencing portion 36B and the lower side projecting wall portion 26B4, the noise can be damped.

As described above, in the present embodiment, entry of noise into the passenger cabin 30 can be suppressed, while ensuring adjustment of the flow of air within the rear wheel house 20 and communication between the passenger cabin 30 interior and the passenger cabin 30 exterior.

<Modified Example>

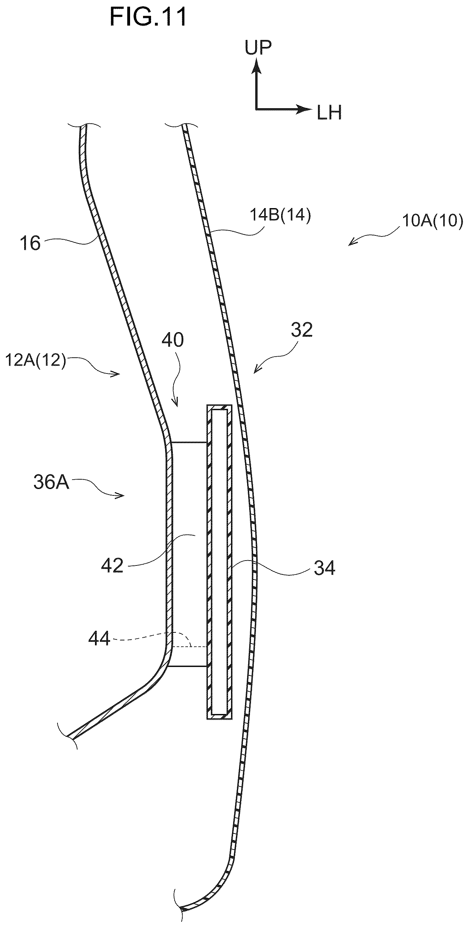

A modified example of the above embodiment is described hereinafter by using Fig. 11.

In this modified example, the air duct 32 has the duct main body portion 34 but does not have the silencing portion 36.

On the other hand, a silencing portion 40 is provided at the quarter panel 16. The silencing portion 40 has a front side silencing member 42 and a lower side silencing member 44.

In detail, the main portion of the front side silencing member 42 is structured of urethane, and the front side silencing member 42 is formed in a rectangular parallelopiped shape that extends in the vehicle vertical direction. The front side silencing member 42 is positioned at the vehicle front side of the vent duct 24, and stands from the quarter panel 16 toward the vehicle transverse direction outer side. Namely, in the vehicle longitudinal direction, the front side silencing member 42 is disposed at a position that is similar to that of the front side silencing portion 36A. Note that the front side silencing member 42 is joined to the quarter panel 16 at unillustrated joined portions by an adhesive or the like. The front side silencing member 42 may fit tightly to the duct main body portion 34, or may be disposed such that there is an interval therebetween.

On the other hand, in the same way as the front side silencing member 42, the main portion of the lower side silencing member 44 is structured of urethane, and the lower side silencing member 44 is formed in a rectangular parallelopiped shape that extends in the vehicle longitudinal direction. The lower side silencing member 44 is positioned at the vehicle lower side of the vent duct 24, and stands from the quarter panel 16 toward the vehicle transverse direction outer side. Namely, in the vehicle vertical direction, the lower side silencing member 44 is disposed at a position that is similar to that of the lower side silencing portion 36B. Note that the lower side silencing member 44 is joined to the quarter panel 16 at unillustrated joined portions by an adhesive or the like. The lower side silencing member 44 may fit tightly to the duct main body portion 34, or may be disposed such that there is an interval therebetween.

In accordance with such a structure, at the vehicle front side of the vent duct 24, the noise that is transmitted from the rear wheel house 20 side to the quarter panel 16 side can be blocked by the front side silencing member 42. Further, at the vehicle lower side of the vent duct 24, the noise that is transmitted from the vehicle lower side to the quarter panel 16 side can be blocked by the lower side silencing member 44.

Moreover, in the present modified example, due to noise being reflected within the voids of the urethane included in the front side silencing member 42 and the lower side silencing member 44, this noise can be damped.

<Supplemental Description of Above Embodiment>

(1) In the above-described embodiment, the silencing portion 36 is provided at the air duct 32, but a structure in which the silencing portion 36 is not provided at the air duct 32 may be employed in accordance with the specifications of the vehicle 10. Further, in a case of employing such a structure, the air duct 32 may be structured such that, at the duct mounting portion 22A at the quarter panel 16, the gap between the duct main body portion 34 and the quarter panel 16 is larger at the vehicle rear side than at the vehicle front side. Moreover, the air duct 32 may be structured such that, at the duct mounting portion 22A at the quarter panel 16, the gap between the duct main body portion 34 and the quarter panel 16 is larger at the vehicle upper side than at the vehicle lower side.

(2) Further, although the silencing portion 36 is provided integrally with the duct main body portion 34 in the above-described embodiment, a structure may be employed in which the silencing portion 36 is made to be a body separate from the duct main body portion 34, in accordance with the specifications of the vehicle 10.

(3) Moreover, although the silencing portion 36 is structured by the pair of silencing wall portions 38 in the above-described embodiment, the silencing portion 36 may be structured by one silencing wall portion 38, in accordance with the specifications of the vehicle 10. Further, the silencing portion 36 may be structured by a bulging portion that projects out from the duct main body portion 34 toward the vehicle transverse direction inner side, and whose cross-sectional shape viewed from the extending direction thereof is a U shape whose vehicle transverse direction outer side is open. Still further, in the above-described embodiment, the silencing wall portion 38 is formed in an L-shape as seen from the vehicle transverse direction. However, in accordance with the specifications of the vehicle 10, the silencing wall portion 38 may be formed in a U shape whose vehicle upper side or vehicle rear side is open, or the silencing wall portion 38 may be structured by only the front side wall portion 38A or the lower side wall portion 38B.

(4) In addition, although the duct main body portion 34 is structured by one member in the above-described embodiment, the structure of the duct main body portion is not limited to this. For example, in accordance with the specifications of the vehicle 10, the vehicle transverse direction outer side of the duct main body portion may be structured by a design panel of the vehicle 10, and the vehicle transverse direction inner side of the duct main body portion may be structured by a member whose cross-section seen from the vehicle longitudinal direction is the shape of a hat whose vehicle transverse direction outer side is open.

**Claims**

1. A vehicle rear portion structure (10A) comprising:

   a vehicle body panel (16) structuring a portion of a vehicle transverse direction outer side of a vehicle body rear portion (12A) at a vehicle rear side of a rear wheel house (20), and in which is formed an opening portion (22) to which is mounted a vent duct (24) that communicates a passenger cabin interior and a passenger cabin exterior; and
   an air duct (32) communicating the rear wheel house side and a back surface side of a vehicle (10), and disposed at a vehicle transverse direction inner side of a design panel that structures a portion of a design surface of a vehicle lateral side surface,
   wherein the air duct (32) is disposed such that at least a portion thereof overlaps the vent duct (24) as seen from a vehicle transverse direction, and, at a duct mounting portion (22A) that is provided at the vehicle body panel (16) along a peripheral edge portion of the opening portion (22), a gap between the air duct (32) and the vehicle body panel (16) is either:

      (A) larger at a vehicle rear side than at a vehicle front side, or
      (B) larger at a vehicle upper side than at a vehicle lower side.

2. The vehicle rear portion structure (10A) of claim 1, further comprising,

   in the case of (A), a front side silencing portion (36A) positioned at a vehicle front side of the vent duct (24) and standing from the air duct (32) toward a vehicle transverse direction inner side, and
   in the case of (B), a lower side silencing portion (36B) positioned at a vehicle lower side of the vent duct (24) and standing from the air duct (32) toward a vehicle transverse direction inner side.

3. The vehicle rear portion structure (10A) of claim 2, wherein

   a dimension of the front side silencing portion (36A) in a vehicle vertical direction is larger than a dimension of the vent duct (24) in the vehicle vertical direction, and
   a dimension of the lower side silencing portion (36B) in a vehicle longitudinal direction is larger than a dimension of the vent duct (24) in the vehicle longitudinal direction.

4. The vehicle rear portion structure (10A) of claim 2, wherein

   the front side silencing portion (36A) is molded integrally with the air duct (32), and
   the lower side silencing portion (36B) is molded integrally with the air duct (32).

5. The vehicle rear portion structure (10A) of claim 2, wherein

   the front side silencing portion (36A) is structured by a pair of wall portions (38A) that are disposed with an interval therebetween in a thickness direction, and

the lower side silencing portion (36B) is structured by a pair of wall portions (38B) that are disposed with an interval therebetween in a thickness direction.

6. The vehicle rear portion structure (10A) of claim 5, wherein

the front side silencing portion (36A) is disposed such that, in the vehicle transverse direction, an interval between the front side silencing portion (36A) and the vehicle body panel (16) is narrower than an interval between the wall portions (38A), and

the lower side silencing portion (36B) is disposed such that, in the vehicle transverse direction, an interval between the lower side silencing portion (36B) and the vehicle body panel (16) is narrower than an interval between the wall portions (38B).

7. The vehicle rear portion structure (10A) of claim 2, wherein

in the case of (A),

the vent duct (24) has a front side projecting wall portion (26B2) that projects out toward a vehicle transverse direction outer side at a vehicle front side of the opening portion (22) and that extends in a vehicle vertical direction, and

the front side projecting wall portion (26B2) is disposed so as to overlap the front side silencing portion (36A) as seen from a vehicle longitudinal direction, and

in the case of (B),

the vent duct (24) has a lower side projecting wall portion (26B4) that projects out toward a vehicle transverse direction outer side at a vehicle lower side of the opening portion (22) and that extends in a vehicle longitudinal direction, and

the lower side projecting wall portion (26B4) is disposed so as to overlap the lower side silencing portion (36B) as seen from a vehicle vertical direction.

8. The vehicle rear portion structure (10A) of claim 1, further comprising,

in the case of (A), a front side silencing member (42) positioned at a vehicle front side of the vent duct (24) and standing from the vehicle body panel (16) toward a vehicle transverse direction outer side, and

in the case of (B), a lower side silencing member (44) positioned at a vehicle lower side of the vent duct (24) and standing from the vehicle body panel (16) toward a vehicle transverse direction outer side.

9. The vehicle rear portion structure (10A) of claim 8, wherein

the front side silencing member (42) is structured to include urethane, and

the lower side silencing member (44) is structured to include urethane.

FIG.1

EP 4 733 178 A1

## FIG.2

# FIG.3

# FIG.4

UP

LH

10A(10)

12A(12)

34(32)

14A(14)

FIG.5

## FIG.6

FIG.7

# FIG.8

# FIG.9

FIG.10

EP 4 733 178 A1

FIG.11

UP

LH

16

14B(14)

10A(10)

12A(12)

40

32

36A

42

34

44

**EUROPEAN SEARCH REPORT**

Application Number

EP 25 21 0066

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | JP 2013 071462 A (TOYOTA MOTOR CORP) 22 April 2013 (2013-04-22) * figures 1-7 * ----- | 1-9 | INV. B62D35/00 B60H1/24 |
| | | | |
| | | | **TECHNICAL FIELDS SEARCHED (IPC)** |
| | | | B62D B60H |

The present search report has been drawn up for all claims

| Place of search | Date of completion of the search | Examiner |
|---|---|---|
| The Hague | 19 February 2026 | Ionescu, Bogdan |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

                                                
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 25 21 0066

This annex lists the patent family members relating to the patent documents cited in the above-mentioned European search report.
The members are as contained in the European Patent Office EDP file on
The European Patent Office is in no way liable for these particulars which are merely given for the purpose of information.

19-02-2026

| Patent document cited in search report | Publication date | Patent family member(s) | Publication date |
|---|---|---|---|
| JP 2013071462 A | 22-04-2013 | NONE | |

For more details about this annex : see Official Journal of the European Patent Office, No. 12/82

**EP 4 733 178 A1**

**Patent documents cited in the description**

- JP 2013071462 A